# EUROPEAN PATENT APPLICATION

(11) **EP 4 822 981 A1**
(43) Date of publication of application: **14.10.2026**
(21) Application number: 26165597.1
(22) Date of filing: 17.03.2026
(51) Int. Cl.: H02P 6/182, B23K 9/12, B23K 9/133

(54) **PUSH-PULL MOTOR SPEED CONTROL**

(30) Priority: 20.03.2025 US 202519084934
(71) Applicant: The ESAB Group Inc., North Bethesda, MD 20852 (US)
(72) Inventor: ERIKSSON, Oscar, Vallda (SE); KLEIVEN, Jimmy, Gothenburg (SE); LENNARTSSON, Daniel, Örebro (SE); PAUSSEN, Armand, Partille (SE); MACHADO, Rodrigo, Onsala (SE); JANKOWSKI, Bartolomeus, Kungälv (SE)
(74) Representative: Murgitroyd & Company

(57) **Abstract**

A method of controlling speeds of motors in push-pull motor wire feeding systems includes operating a pull motor for a welding wire in a welding apparatus (1102), operating a current feedback control loop for the pull motor based on a value indicative of current being drawn by the pull motor (1104), operating a speed feedback control loop for the pull motor based on a value representative of a speed of the pull motor (1106), and supplying an output of the speed feedback control loop as a reference input to the current feedback control loop (1108). Push-pull motor wire feeding systems employing said method are also provided.

## Description

### Field of the Disclosure

The present disclosure relates generally to welding equipment and, more particularly, to an approach to synchronize the speed of a pull and a push motor to convey a consumable wire electrode, or welding wire, toward a weld zone in a welding system.

### Background of the Disclosure

Many welding applications utilize a consumable wire electrode commonly referred to as "welding wire." The welding wire may be provided continuously through a welding torch utilizing various wire feeder technologies.

When feeding the welding wire through a welding gun or welding torch (or, more simply, "torch"), over distance or at angles in field environments, a "push-pull" motor system may be used. One motor (a pull motor) may be located in, or near, the torch and is configured to pull the wire from the welding wire source to the torch. A second motor (a push motor) may be located remotely, such as at, or near, a wire feeder, where the welding wire supply is stored, and is configured to push the welding wire from the source towards the torch. The second (push) motor, which could also be a boost feeder or a sub-feeder operating as, or in addition to, the second (push) motor, could also be located anywhere along the supply line of the welding wire between the source of the welding wire and the torch.

Based on the parameters required for a welding operation, operator preference or skill, or other factors, it is typically desirable to feed the welding wire at a predetermined speed such that a predetermined amount of welding wire is delivered over a predetermined period of time via the torch to the welding zone during a welding operation. Such steady pacing of the welding wire may result in improved welding results.

However, because no two motors (e.g., the pull motor and the push motor) are exactly alike, one motor may tend to feed welding wire with a greater power or speed than the other. These differences may cause the welding wire to incur unintended stress, in the form of, e.g., tension or compression, and may also cause increased wear on the motors if the action of one motor causes resistance to the other motor. This undesirable or unintended stress may also cause excess wear of an inner liner or a conduit through which the welding wire passes, thus potentially causing contamination of a weld pool.

Accordingly, there is a need for improved synchronization control between, or among, the multiple motors in a push-pull motor system.

### Summary of the Disclosure

According to a first aspect of the present invention there is provided a method comprising: operating a pull motor for a welding wire in a welding apparatus; operating a current feedback control loop for the pull motor based on a value indicative of current being drawn by the pull motor; operating a speed feedback control loop for the pull motor based on a value representative of a speed of the pull motor; and supplying an output of the speed feedback control loop as a reference input to the current feedback control loop.

Preferably, the pull motor is disposed in a welding torch of the welding apparatus.

The method may further comprise employing the value indicative of current being drawn by the pull motor as a reference value for a current feedback control loop for a push motor for the welding wire.

The method may further comprise scaling the value indicative of current being drawn by the pull motor prior to using the value indicative of current being drawn by the pull motor as the reference value for the current feedback control loop for the push motor for the welding wire.

The method may further comprise employing a value indicative of current being drawn by the push motor as a reference value for a current feedback control loop for a boost motor for the welding wire.

The method may further comprise receiving, via user input, a reference welding wire feed speed for the speed feedback control loop for the pull motor.

The method may further comprise receiving an encoder value as the value representative of the speed of the pull motor.

The method may further comprise measuring a value indicative of back electromotive force as the value representative of the speed of the pull motor.

The method may further comprise measuring the value indicative of back electromotive force during periods when the pull motor is not receiving power.

Preferably, an operational frequency of the current feedback control loop for the pull motor is higher than an operational frequency of the speed feedback control loop.In another embodiment, a push-pull motor wire feeding system for a welding system is provided and includes a pull motor disposed in, or near, a welding torch and configured to pull welding wire from a welding wire source, and a push motor disposed between the pull motor and the welding wire source, wherein a speed of the push motor is synchronized to a speed of the pull motor based, e.g., on a value indicative of current being drawn by the pull motor, and wherein the speed of the pull motor is regulated by a value of an actual speed of the pull motor compared to a reference value.

According to a second aspect of the present invention there is provided a push-pull motor wire feeding system for a welding system which includes a pull motor configured to pull welding wire from a welding wire source, and a push motor disposed between the pull motor and the welding wire source, wherein a speed of the push motor is synchronized to a speed of the pull motor based on a value indicative of current being drawn by the pull motor, wherein the speed of the pull motor is regulated by a value indicative of current being drawn by the pull motor and by a value indicative of the speed of the pull motor.

Preferably, the value indicative of speed of the pull motor is derived from a pull motor encoder.

The push-pull motor wire feeding system may further comprise a cascade regulator comprising a pull motor current regulator and a pull motor speed regulator.

Preferably, an output of the pull motor speed regulator is used as a reference value for the pull motor current regulator.

Preferably, the pull motor current regulator, in response to detecting a difference between an output of the pull motor speed regulator and the value indicative of current being drawn by the pull motor, is configured to generate a pulse width modulation signal to control the speed of the pull motor.

The push-pull motor wire feeding system may further comprise a boost motor, and a speed of the boost motor is synchronized to the speed of the push motor.

According to a third aspect of the present invention there is provided a push-pull motor wire feeding system for a welding system which includes a pull motor disposed in a welding torch and configured to pull welding wire from a welding wire source, a push motor disposed between the pull motor and the welding wire source and configured to push the welding wire towards the welding torch, wherein a speed of the pull motor is controlled with a single loop feedback control system, and a speed of the push motor is synchronized to the speed of the pull motor via a value indicative of current being drawn by the pull motor.

Preferably, the speed of the pull motor is controlled in response to value indicative of the speed of the pull motor.

Preferably, the value indicative of the speed of the pull motor is derived from at least one of a pull motor encoder, a pull motor tachogenerator, or a measure back electromotive force (EMF).

The push-pull motor wire feeding system may further comprise a boost motor, and a speed of the boost motor is synchronized to the speed of the push motor.

### Brief Description of the Drawings

By way of example, embodiments of the disclosed systems and methods will now be described, with reference to the accompanying drawings, in which:
FIG. 1 is a block diagram of a welding system including a pull (primary) motor and a push (secondary) motor for conveying, or feeding, welding wire through a welding torch toward a weld zone, in accordance with an example embodiment.
FIG. 2 is a block diagram showing a motor control circuit used to synchronize the push motor to the pull motor, in accordance with an example embodiment.
FIG. 3A is a block diagram showing a push-pull motor system with an extended boost motor that is synchronized to the push motor, according to an example embodiment.
FIG. 3B is block diagram showing another configuration for a push-pull motor system with an extended boost motor that is synchronized to the push motor, according to an example embodiment.
FIG. 4 is a more detailed block diagram of a push-pull motor system that relies on back EMF of the pull motor in a speed control feedback loop, in accordance with an example embodiment.
FIG. 5 is a graph showing the timing of when measures of back EMF may be made, in accordance with an example embodiment.
FIG. 6 is a block diagram of a first approach to measure back EMF of the pull motor, in accordance with an example embodiment.
FIG. 7 is a block diagram of a second approach to measure back EMF of the pull motor, in accordance with an example embodiment.
FIG. 8 is a block diagram of a third approach to measure back EMF of the pull motor, in accordance with an example embodiment.
FIG. 9 is a block diagram of a fourth approach to measure back EMF of the pull motor, in accordance with an example embodiment.
FIG. 10 is a detailed block diagram of a push-pull motor system that relies on encoder data obtained from the pull motor and that is used in a speed control feedback loop, in accordance with an example embodiment.
FIG. 11 is a flowchart depicting a series of operations for executing a push-pull motor synchronization control system, according to an example embodiment.

### Detailed Description

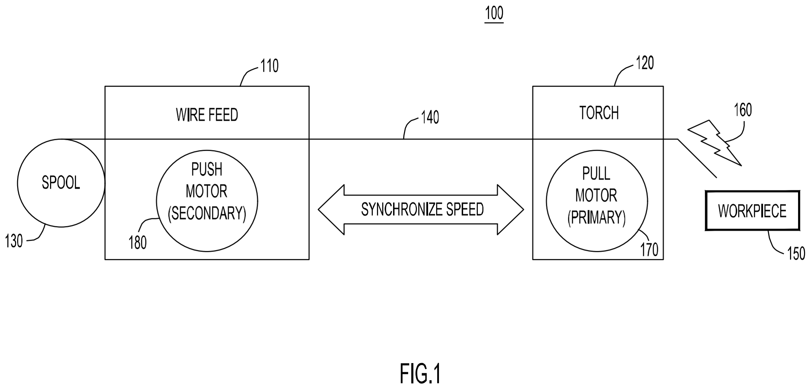

FIG. 1 is a block diagram of a welding system 100 including a pull (primary) motor and a push (secondary) motor for conveying, or feeding, welding wire through a welding torch towards a weld zone, in accordance with an example embodiment. More specifically, welding system 100 includes a wire feeder 110 and a welding torch (or "torch") 120. Welding wire 140, supplied from a spool 130 (i.e., a welding wire source), is fed from the wire feeder 110 to the torch 120, via an appropriate conduit and/or liner (not shown), and is output towards a workpiece 150 in the presence of an electric arc 160. A typical welding process in this context may be Gas Metal Arc Welding (GMAW) welding in which the torch 120 also outputs, simultaneously with the welding wire 140, an active (pure or mixed) or an inert shielding gas to prevent unwanted oxidation in the weld zone.

As shown in FIG. 1, the welding wire 140 is conveyed or fed using two motors: a pull motor 170 (also referred to as a "primary motor" 170) and a push motor 180 (also referred to as a "secondary motor" 180). It is preferable that the speed of these two motors be synchronized so that the welding wire 140 is not subjected to undesirable tension or compression, each of which can lead to wire feeding problems. The embodiments described herein provide control mechanisms that help to synchronize the push motor 180 to the pull motor 170 and thereby enable the welding wire 140 to be conveyed in a smooth and efficient manner through a conduit/liner and to the weld pool.

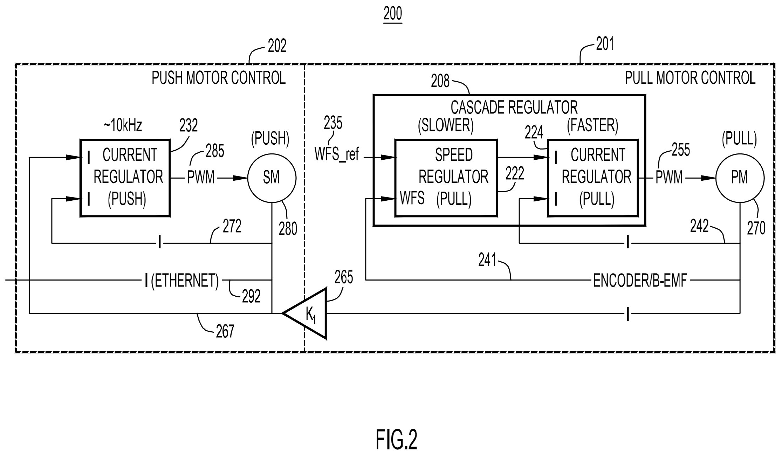

FIG. 2 is a block diagram showing a motor control circuit 200 used to synchronize a push motor to a pull motor, in accordance with an example embodiment. Motor control circuit 200 comprises a pull motor control section 201 and a push motor control section 202. Pull motor control section 201 includes pull motor 270 and a cascade regulator 208, which includes a pull speed regulator 222 and a pull current regulator 224. The push motor control section 202 includes a push motor 280 and a push current regulator 232. As can further be seen in FIG. 2, pull motor control section 201 includes two control or feedback loops: a first, outer, feedback loop 241 and a second, inner, feedback loop 242. First, outer, feedback loop 241 supplies a value indicative of the speed of the pull motor 270. That value could be an encoder value, a tachometer or tachogenerator value, a value of back electromotive force ("back EMF") generated by pull motor 270, or other value indicative of speed of pull motor 270. The fed back value, which is indicative of the speed of pull motor 270, is supplied to pull speed regulator 222, which compares the fed back value to a wire feed speed reference value (WFS_ref) 235 provided, e.g., by an operator of the welding system, via a user interface (not shown). The output of pull speed regulator 222 is supplied to pull current regulator 224 as a reference value. The second, inner, feedback loop 242 supplies a value indicative of current (I) being drawn by the pull motor 270. The pull current regulator 224 compares the output of pull speed regulator 222 with the value indicative of current being drawn by the pull motor 270 and, responsive to the comparison, generates a pulse width modulation (PWM) signal 255 to control the speed of the pull motor 270. That is, PWM signal 255 is used to control the application of electric power being supplied to pull motor 270, and thus the speed of pull motor 270.

Notably, pull speed regulator 222 and pull current regulator 224 may operate at different frequencies, with the pull speed regulator 222 operating more slowly than the pull current regulator 224. For example, in the one possible implementation, the pull speed regulator 222 operates at a slower frequency (e.g., on the order of 1 kHz) than the pull current regulator 224 (which may operate at a frequency on the order of 10 kHz). Those skilled in the art will appreciate that the particular frequency values are merely examples, and other values may be implemented based on a given particular scenario. In many cases, though, the second, inner, feedback loop 242 operates at a higher frequency than the first, outer, feedback loop 241 since it may be easier/quicker to monitor current changes than indications of speed changes. Those skilled in the art will appreciate that the fed back values being supplied to pull speed regulator 222 and the pull current regulator 224 may be scaled/converted to appropriate values (e.g., respective voltages) so that the reference values and fed back values can be accurately compared to one another.

In any event, using a faster inner loop and a slower outer loop in the cascade regulator 208 enables the speed of the pull motor 270 to be better regulated to the desired wire feed speed. More specifically, and as noted, a change in speed may be observed faster by monitoring the motor current compared to waiting for a slower response from, e.g., a motor encoder (even if the pull speed regulator 222 and the pull current regulator 224 are operating at the same or similar frequencies). By acting on the change of motor current to maintain the speed (increasing or decreasing PWM duty cycle) a more stable speed with less fluctuation may be achieved compared to using only the speed measurement as the single source for regulation. The speed is still used in cascade regulator 208 to be able to determine what speed that is achieved. That is, the monitored current is proportional to the torque and, as such, does not contain any direct information of the speed of pull motor 270. Therefore, a valued indicative of the speed is fed back as well.

As further shown in FIG. 2, the same value indicative of current supplied to pull current regulator 224 in the second, inner, feedback loop 242 may also be supplied, via a scaling constant K1 265, to push current regulator 232 and used as a reference value for push motor 280. That is, a scaled value 267, indirectly indicative of the speed of pull motor 270, is supplied as a reference value to push current regulator 232. A feedback loop 272 in the push motor control section 202 of the motor control circuit 200 supplies a value indicative of current being drawn by the push motor 280 (this value being indirectly indicative of the speed of push motor 280). The push current regulator 232 compares the fed back value indicative of current being drawn by the push motor 280 with the scaled value 267 indicative of current being drawn by the pull motor 270 and generates a pulse width modulation (PWM) signal 285 to control the speed of the push motor 280, accordingly. In this way, the speed of the push motor 280 is synchronized, through torque control, to the speed of pull motor 270, which, itself, maintains a stable speed given the dual feedback loop configuration of the cascade regulator 208.

The value indicative of current being drawn by the push motor 280 in feedback loop 272 may also be supplied to a third motor downstream from push motor 280, via feedback path 292, which may be part of a network such as the Internet (or other network communication scheme), such that the speed of the third motor is synchronized to the speed of the push motor 280. In this scenario, the push motor 280 may be operable as both a push and a pull motor, i.e., pulling welding wire from the third motor, and pushing the welding wire towards the pull motor 270.

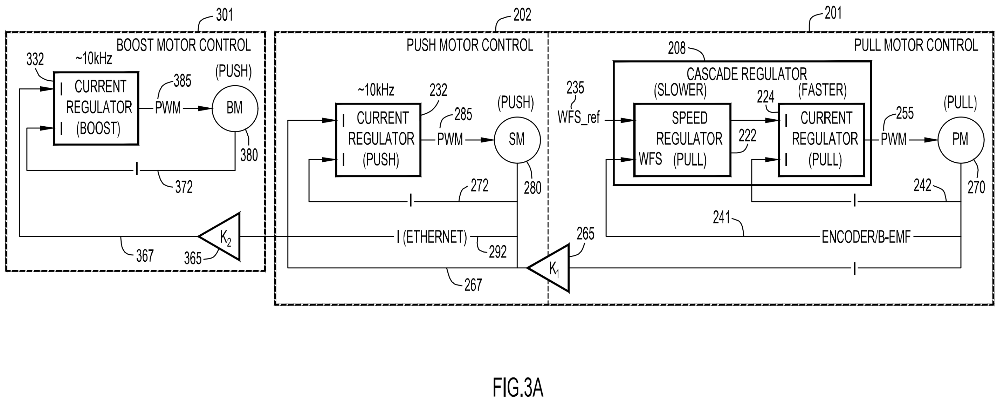

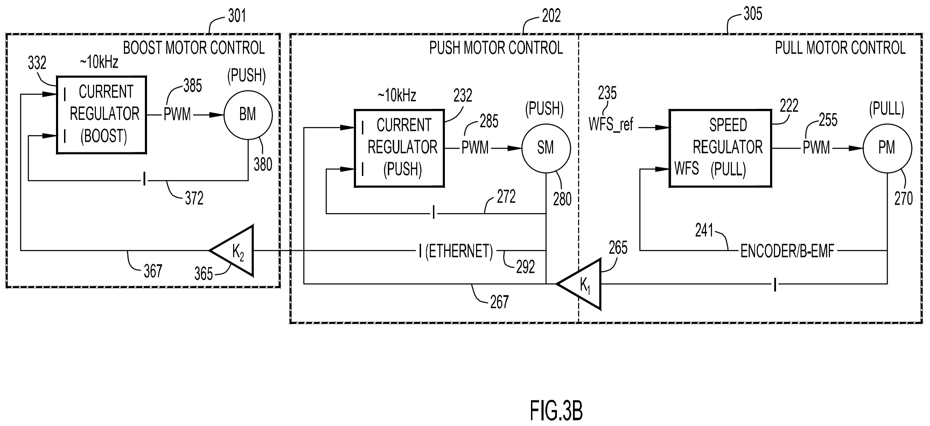

This "third motor" scenario is shown in FIG. 3A, which is a block diagram showing a push-pull motor system with an extended boost (third) motor that is synchronized to the push motor, according to an example embodiment. In FIG. 3A, the right-hand side of the figure is the same as the diagram shown in FIG. 2. The left-hand side of FIG. 3 shows the added (third) boost motor (BM) 380 and boost motor control 301. As shown, the value indicative of current supplied to push motor 280 is supplied, via a scaling constant K2 365, to a boost current regulator 332 and is used as a reference value for boost motor 380. That is, a scaled value 367, indirectly indicative of the speed of push motor 280, is supplied as a reference value to boost current regulator 332. A feedback loop 372 supplies a value indicative of current being drawn by the boost motor 380 (with this value being indirectly indicative of the speed of boost motor 380). The boost current regulator 332 compares the fed back value indicative of current being drawn by the boost motor 380 with the scaled value 367 indicative of current being drawn by the push motor 280 and generates a pulse width modulation (PWM) signal 385 to control the speed of the boost motor 380, accordingly. In this way, the speed of the boost motor 380 is synchronized to the speed of push motor 280, which, itself, is synchronized to the speed of the pull motor 270. As a result of the arrangement described above, the speed of all motors involved in the delivery of welding wire 140 to the torch 120 and weld zone are synchronized.

FIG. 3B is block diagram showing another configuration for a push-pull motor system with an extended boost motor that is synchronized to the push motor, according to an example embodiment. FIG. 3B is similar to FIG. 3A, but in this case a pull motor control section 305 does not include cascade regulator 208 with current regulator 224 as in FIG. 3A, but instead comprises only speed regulator 222. A value indicative of current (I) supplied to pull motor 270 may also be supplied, as in FIG. 3A, via a scaling constant K1 265, to push current regulator 232 and used as a reference value for push motor 280. Thus, in the case of FIG. 3B, pull motor control section 305 comprises a single feedback loop based on speed (from, e.g., an encoder, tachogenerator, or back EMF).

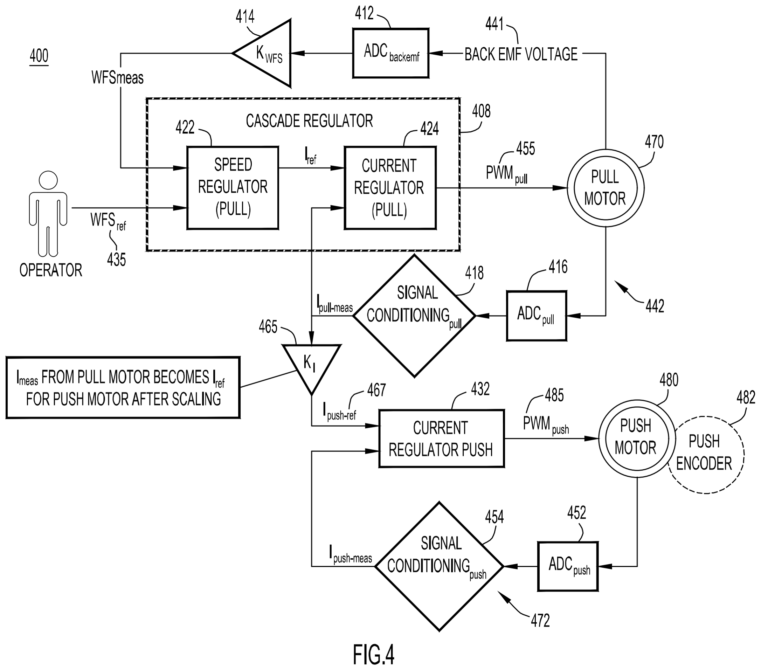

FIG. 4 is a more detailed block diagram of a push-pull motor system that relies on back EMF of the pull motor, or other speed indicator such as an IR compensation value, in a speed control feedback loop, in accordance with an example embodiment. As shown, a motor control circuit 400 comprises pull motor 470, a cascade regulator 408, which includes a pull speed regulator 422 and a pull current regulator 424, a push motor 480 and a push current regulator 432. As can further be seen in FIG. 4, a first, outer, feedback loop 441 supplies a value of back electromotive force ("back EMF") generated by pull motor 470. The fed back value is indicative of the speed of pull motor 470. Specifically, the motor voltage/Back EMF [V] is converted to speed by multiplying the voltage and the motor speed constant [rpm/V] to achieve the speed (in rpm). The rpm value is then converted to wire feed speed in mm/min (or m/min). The fed back value is supplied to pull speed regulator 422, which compares the fed back value to a wire feed speed reference value (WFS_ref) 435 provided, e.g., by an operator of the welding system, via a user interface (not shown). The value of back EMF may be passed through analog-to-digital converter (ADC) 412 and a scaling factor K_{WFS} 414. The signal may be conditioned/filtered along this path, as well. The output of pull speed regulator 422 is supplied to pull current regulator 424 as a reference value (I_{ref}).

A second, inner, feedback loop 442 supplies a value indicative of current being drawn by the pull motor 470. The value may be passed through ADC 416 and appropriate signal conditioning 418, such as a finite impulse response (FIR) filter. The pull current regulator 424 compares the output of pull speed regulator 422 (I_{ref}) with the resulting value Iₚᵤₗₗ₋ₘₑₐₛ, the value indicative of current being drawn by the pull motor 470 and, responsive to the comparison, generates a pulse width modulation (PWM) signal 455 to control the speed of the pull motor 70. That is, PWM signal 455 is used to control the application of electric power being supplied to pull motor 470, and thus the speed of pull motor 470.

As explained in connection with FIG. 2 and cascade regulator 208, pull speed regulator 422 and pull current regulator 424 may operate at different frequencies, with the pull speed regulator 422 operating more slowly than the pull current regulator 424. In other words, the second, inner, feedback loop 442 may operate at a higher frequency than the first, outer, feedback loop 441.

As further shown in FIG. 4, the same value indicative of current supplied to pull current regulator 424 in the second, inner, feedback loop 442 may also be supplied, via a scaling constant K1 465, to push current regulator 432 and used as a reference value for push motor 480. That is, a scaled value 467 (I_{push-ref}), indirectly indicative of the speed of pull motor 470, is supplied as a reference value to push current regulator 432. A feedback loop 472 supplies a value indicative of current being drawn by the push motor 480 (this value being indirectly indicative of the speed of push motor 480) via ADC 452 and signal conditioning 454, such as a FIR filter. An encoder value from an optional encoder 482 may also be supplied as a measure of speed of push motor 480 and used in combination with the current measurement, as explained in connection with cascade regulator 408. The push current regulator 432 compares the fed back value indicative of current being drawn by the push motor 480 with the scaled value 467 indicative of current being drawn by the pull motor 470 and generates a pulse width modulation (PWM) signal 485 to control the speed of the push motor 480, accordingly. In this way, the speed of the push motor 480 is synchronized to the speed of pull motor 470, which, itself, maintains a stable speed given the dual feedback loop configuration of the cascade regulator 408.

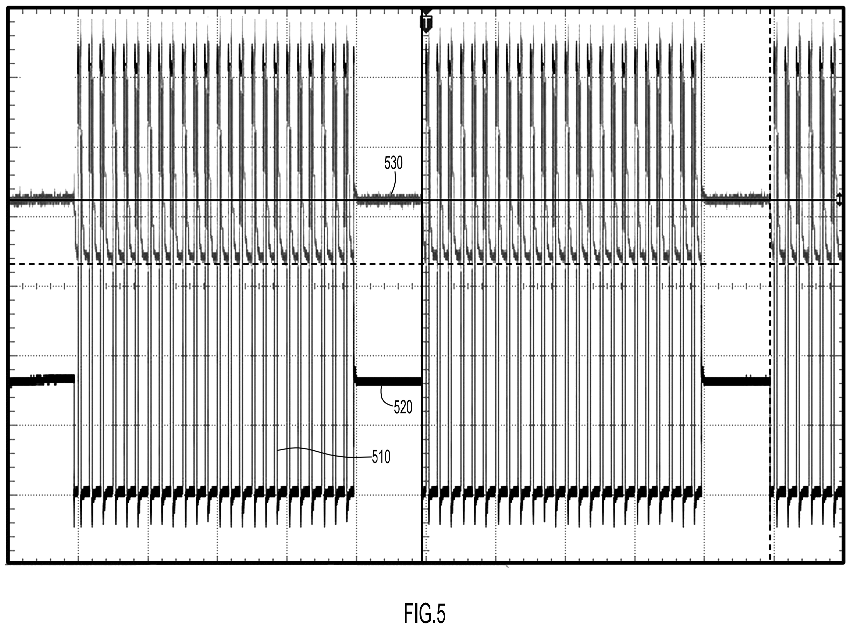

FIG. 5 is a graph showing the timing when measures of back EMF may be made, in accordance with an example embodiment. As shown, a motor voltage signal 510 represents the application of a PWM signal that controls the repeated, intermittent, application of power to, e.g., pull motor 270 in FIG. 2. Periodically, and at the operational frequency of pull speed regulator 222, the PMW signal may be disabled thus causing a predetermined period of time 520 during which no power is applied to pull motor 270. During this period of time, a measure of back EMF 530 may be taken.

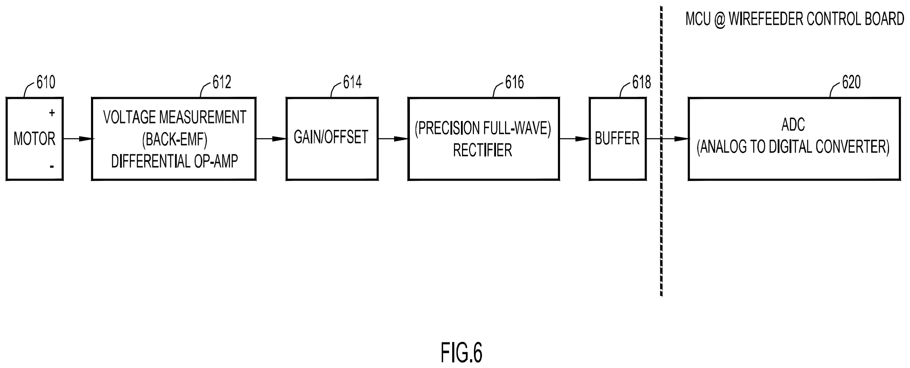

FIG. 6 is a block diagram of first approach to measure back EMF of the pull motor, in accordance with an example embodiment. As shown, the plus and minus terminals of a motor 610, such as pull motor 470 in FIG. 4, are connected across a differential operational amplifier (op-amp) 612. An output of differential op-amp 612 is supplied to a gain/offset circuit 614, which provides its output to a rectifier 616. An output of rectifier 616 is passed through a buffer 618, and an output of buffer 618 is supplied to an ADC 620, such as ADC 412 in FIG. 4. The measured ADC value corresponds to the motor generator voltage, i.e., Back EMF.

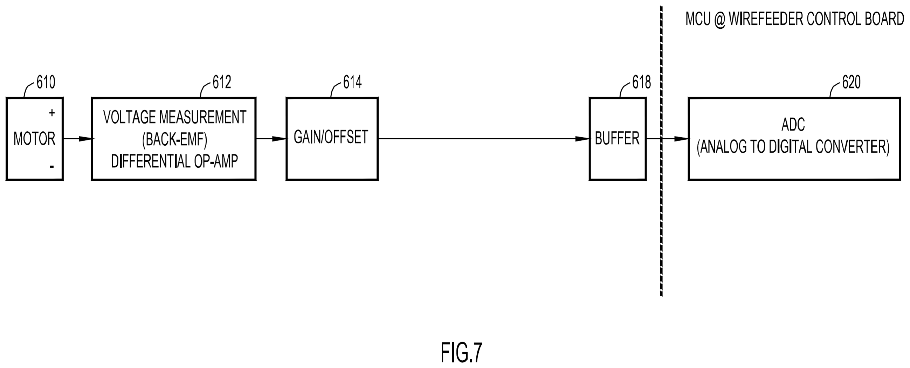

FIG. 7 is a block diagram of a second approach to measure back EMF of the pull motor, in accordance with an example embodiment. The configuration shown in FIG. 7 is the same as that shown in FIG. 6, except the rectifier 616 is eliminated. As such, the direction of the motor can also be detected, which may be useful in some implementations.

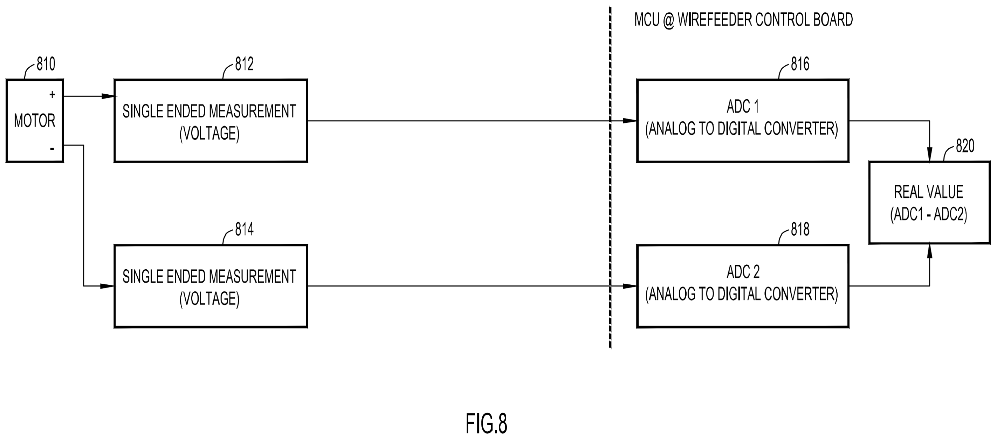

FIG. 8 is a block diagram of a third approach to measure back EMF of the pull motor, in accordance with an example embodiment. In this approach, the plus and minus terminals of a motor 810, such as pull motor 470 in FIG. 4, are connected respectively, to single ended measurement circuits 812, 814. The outputs of those circuits are supplied to respective ADCs, namely ADC1 816 and ADC2 818. An real value of the back EMF may then be calculated by circuit 820 by subtracting the output of ADC2 818 from ADC1 816.

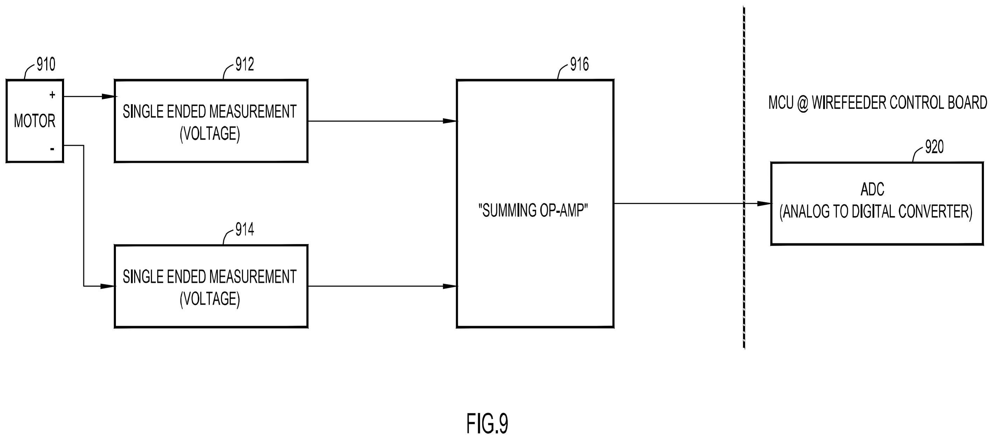

FIG. 9 is a block diagram of a fourth approach to measure back EMF of the pull motor, in accordance with an example embodiment. In this approach, as in FIG. 8, the plus and minus terminals of a motor 910, such as pull motor 470 in FIG. 4, are connected respectively, to single ended measurement circuits 912, 914. The outputs of those circuits are supplied to a summing circuit 916 (e.g., an op-amp), and an output of the summing circuit 916 is supplied to an ADC 920.

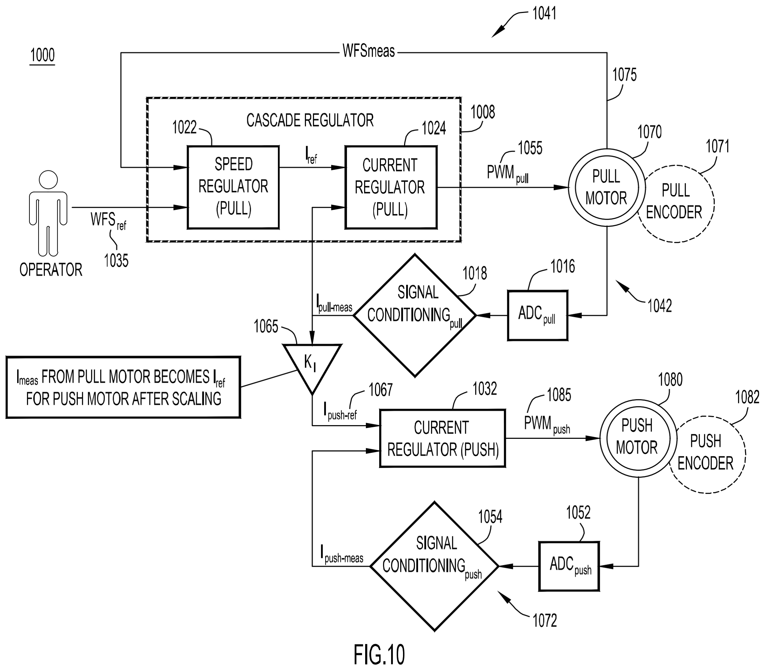

FIG. 10 is a detailed block diagram of a push-pull motor system that relies on encoder data obtained from the pull motor and that is used in a speed control feedback loop, in accordance with an example embodiment. As shown, a motor control circuit 1000 comprises pull motor 1070, a cascade regulator 1008, which includes a pull speed regulator 1022 and a pull current regulator 1024, a push motor 1080 and a push current regulator 1032. As can further be seen in FIG. 10, a first, outer, feedback loop 1041 supplies an encoder value 1075 (WFSₘₑₐₛ) generated by encoder 1071 associated with pull motor 1070 that is indicative of the speed of pull motor 1070. Encoder value 1075 is supplied to pull speed regulator 1022, which compares the fed back value to a wire feed speed reference value (WFS_{ref}) 1035 provided, e.g., by an operator of the welding system, via a user interface (not shown). The output of pull speed regulator 1022 is supplied to pull current regulator 1024 as a reference value (I_{ref}).

A second, inner, feedback loop 1042 supplies a value indicative of current being drawn by the pull motor 1070. The value may be passed through ADC 1016 and signal conditioning 1018, such as a finite impulse response (FIR) filter. The pull current regulator 1024 compares the output of pull speed regulator 1022 (I_{ref}) with Lₚᵤₗₗ₋ₘₑₐₛ, the value indicative of current being drawn by the pull motor 1070 and, responsive to the comparison, generates a pulse width modulation (PWM) signal 1055 to control the speed of the pull motor 1070. That is, PWM signal 1055 is used to control the application of electric power being supplied to pull motor 1070, and thus the speed of pull motor 1070.

As explained in connection with FIG. 2 in connection to cascade regulator 208, pull speed regulator 1022 and pull current regulator 1024 may operate at different frequencies, with the pull speed regulator 1022 operating more slowly than the pull current regulator 1024. In other words, the second, inner, feedback loop 1042 may operate at a higher frequency than the first, outer, feedback loop 1041.

As further shown in FIG. 10, the same value indicative of current supplied to pull current regulator 1024 in the second, inner, feedback loop 1042 may also be supplied, via a scaling constant K1 1065, to push current regulator 1032 and is used as a reference value for push motor 1080. That is, a scaled value 1067 (I_{push-ref}), indirectly indicative of the speed of pull motor 1070, is supplied as a reference value to push current regulator 1032. A feedback loop 1072 supplies a value indicative of current being drawn by the push motor 1080 (this value being indirectly indicative of the speed of push motor 1080) via ADC 1052 and signal conditioning 1054, such as a FIR filter. An encoder value from encoder 1082 could instead be supplied as the value indicative of speed of push motor 1080 used in combination with the current measurement as explained in connection with cascade regulator 1008. The push current regulator 1032 compares the fed back value indicative of current being drawn by the push motor 1080 with the scaled value 1067 indicative of current being drawn by the pull motor 1070 and generates a PWM signal 1085 to control the speed of the push motor 1080, accordingly. In this way, the speed of the push motor 1080 is synchronized to the speed of pull motor 1070, which, itself, maintains a stable speed given the dual feedback loop configuration of the cascade regulator 1008. Thus, the main difference between the approach depicted in FIG. 4 and the approach described in connection with FIG. 10 is the use of encoder values (as opposed to back EMF values) in the outer feedback loop of the cascade regulator 1008.

Those skilled in art will appreciate that Back EMF and encoder data have been described as approaches to obtain speed data from the pull motor. However, other speed determining approaches may also be implemented including, e.g., a tachogenerator.

In an embodiment, in the event a torch without a pull motor is used and connected to the system, push motor 180, 280, 480, 1080 may become the primary motor that is controlled by cascade regulator 208, 408, 1008. Control logic can be used to detect this scenario and make appropriate signal connections.

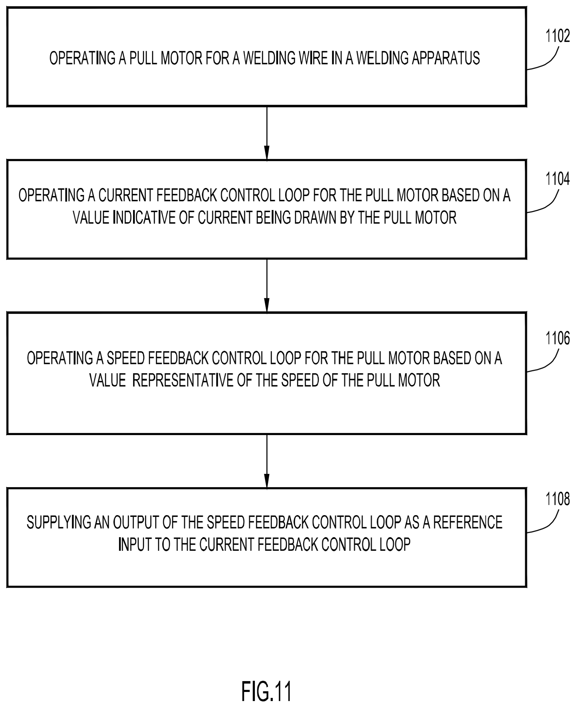

FIG. 11 is flowchart depicting a series of operations for executing a push-pull motor synchronization control system, according to an example embodiment. At 1102, an operation includes operating a pull motor for a welding wire in a welding apparatus. At 1104, an operation includes operating a current feedback control loop for the pull motor based on a value indicative of current being drawn by the pull motor. At 1106, an operation includes operating a speed feedback control loop for the pull motor based on a value representative of the speed of the pull motor. And, at 1108, an operation includes supplying an output of the speed feedback control loop as a reference input to the current feedback control loop. In an embodiment, the current feedback control loop for the pull motor operates at a higher frequency than the speed feedback control loop for the pull motor.

Thus, those skilled in the art will appreciate that the embodiments described herein provide a unique approach to synchronizing the speeds of motors in a push-pull motor system that conveys welding wire in a welding system. The above description is intended by way of example only. Various modifications and structural changes may be made therein without departing from the scope of the concepts described herein and within the scope and range of equivalents of the claims.

## Claims

1. A method comprising:
operating a pull motor for a welding wire in a welding apparatus;
operating a current feedback control loop for the pull motor based on a value indicative of current being drawn by the pull motor;
operating a speed feedback control loop for the pull motor based on a value representative of a speed of the pull motor; and
supplying an output of the speed feedback control loop as a reference input to the current feedback control loop.

2. The method of claim 1, wherein the pull motor is disposed in a welding torch of the welding apparatus.

3. The method of claim 1, further comprising employing the value indicative of current being drawn by the pull motor as a reference value for a current feedback control loop for a push motor for the welding wire.

4. The method of claim 3, further comprising:
scaling the value indicative of current being drawn by the pull motor prior to using the value indicative of current being drawn by the pull motor as the reference value for the current feedback control loop for the push motor for the welding wire; or
employing a value indicative of current being drawn by the push motor as a reference value for a current feedback control loop for a boost motor for the welding wire.

5. The method of claim 1, further comprising:
receiving, via user input, a reference welding wire feed speed for the speed feedback control loop for the pull motor; or
receiving an encoder value as the value representative of the speed of the pull motor.

6. The method of claim 1, further comprising:
measuring a value indicative of back electromotive force as the value representative of the speed of the pull motor; or
measuring the value indicative of back electromotive force during periods when the pull motor is not receiving power.

7. The method of claim 1, wherein an operational frequency of the current feedback control loop for the pull motor is higher than an operational frequency of the speed feedback control loop.

8. A push-pull motor wire feeding system for a welding system, comprising:
a pull motor configured to pull welding wire from a welding wire source; and
a push motor disposed between the pull motor and the welding wire source, wherein a speed of the push motor is synchronized to a speed of the pull motor based on a value indicative of current being drawn by the pull motor,
wherein the speed of the pull motor is regulated by a value indicative of current being drawn by the pull motor and by a value indicative of the speed of the pull motor.

9. The push-pull motor wire feeding system of claim 8, wherein the value indicative of speed of the pull motor is derived from a pull motor encoder.

10. The push-pull motor wire feeding system of claim 8, further comprising a cascade regulator comprising a pull motor current regulator and a pull motor speed regulator.

11. The push-pull motor wire feeding system of claim 10, wherein:
an output of the pull motor speed regulator is used as a reference value for the pull motor current regulator; or
the pull motor current regulator, in response to detecting a difference between an output of the pull motor speed regulator and the value indicative of current being drawn by the pull motor, is configured to generate a pulse width modulation signal to control the speed of the pull motor.

12. A push-pull motor wire feeding system for a welding system, comprising:
a pull motor disposed in a welding torch and configured to pull welding wire from a welding wire source;
a push motor disposed between the pull motor and the welding wire source and configured to push the welding wire towards the welding torch,
wherein a speed of the pull motor is controlled with a single loop feedback control system, and
a speed of the push motor is synchronized to the speed of the pull motor via a value indicative of current being drawn by the pull motor.

13. The push-pull motor wire feeding system of claim 12, wherein the speed of the pull motor is controlled in response to value indicative of the speed of the pull motor.

14. The push-pull motor wire feeding system of claim 13, wherein the value indicative of the speed of the pull motor is derived from at least one of a pull motor encoder, a pull motor tachogenerator, or a measure back electromotive force (EMF).

15. The push-pull motor wire feeding system of claim 8 or claim 12, further comprising a boost motor, and a speed of the boost motor is synchronized to the speed of the push motor.
